# EUROPEAN PATENT SPECIFICATION

(11) **EP 2 501 605 B1**
(45) Date of publication and mention of the grant of the patent: **31.08.2016**
(21) Application number: 09756488.4
(22) Date of filing: 19.11.2009
(51) Int. Cl.: B62D 55/084, E02F 9/02

(54) **APPARATUS FOR A VARIABLE GAUGE UNDERCARRIAGE**
VORRICHTUNG FÜR EIN FAHRWERK MIT VARIABLER SPURWEITE
DISPOSITIF POUR UN TRAIN DE ROULEMENT À JAUGE VARIABLE

(43) Date of publication of application: 26.09.2012
(73) Proprietor: Caterpillar Commercial S.A.R.L., 93208 Paris, Saint-Denis (FR)
(72) Inventor: GALLIGNANI, Luigi, I-40026 Imola (IT)
(74) Representative: BRP Renaud & Partner mbB Rechtsanwälte Patentanwälte Steuerberater
(86) International application number: PCT/EP2009/065506
(87) International publication number: WO 2011/060824

(56) References cited:
- JP-A- 2005 067 336
- US-A- 3 840 095
- US-A- 5 489 114
- US-B2- 6 796 391

## Description

### Technical Field

This disclosure relates to variable gauge undercarriages of vehicles, particularly, to an apparatus and a method for limiting relative movement between sliding parts of a structure provided for varying the gauge of a variable gauge undercarriage. More particularly, this disclosure relates to an apparatus and a method to compensate for clearance between telescopic members of a variable gauge undercarriage.

### Background

Undercarriages with variable gauges are generally known. Such undercarriages may comprise a central frame which may be adapted to support operating machinery such as earth moving machines and cranes, and lateral sub-frames which may support the tracks. The sub-frames may flank the central frame.

Various engineering vehicles, such as cranes, excavators or earth movers, may incorporate a variable gauge undercarriage. The variable gauge undercarriages may be restricted in width for transportation of the engineering vehicle, while during operation the undercarriage of the engineering vehicle may be extended as the vehicle may be required to perform certain functions, such as excavating or transporting earth or other functions in which the general performance of the machine may be contingent on ground stability. Particularly, the width of the undercarriage, i.e. the distance between its two side tracks, may be increased during operation in order to have large ground stability dimensions.

The change in the width of the undercarriage, through lateral movement of the sub-frames, may be achieved by means of hydraulic cylinders installed in the vehicle. The hydraulic cylinders operate within telescopic members such as cross members. The central frame and sub-frames may be coupled to each other through these telescopic members which may slide in opposite directions to extend the sub-frames further from the central frame or to retract the sub-frames closer to the central frame.

The telescopic members of a variable gauge undercarriage may be provided with a clearance which allows for play between the cooperating telescopic members. However, during operation of a vehicle having a variable gauge undercarriage, the clearance may have undesirable effects such as weight-based shifting which may result in the reduction or loss of precision and stability of the vehicle.

US Patent No. 6,145,610, in the name of Caterpillar Inc, describes an apparatus for compensating of play between relative sliding beam elements. The apparatus is constituted by a pair of co-operating wedges which press the sliding beam elements together in a direction transverse the beams to compensate for play between the beam elements. The wedges are provided with the necessary force by a thrust element to press on the sliding elements. The thrust element may be actuated manually or by a remote control which also controls the actuation of a device which mechanically locks the beams.

US Patent No. 6,796,391 describes clamping devices which are hydraulically operable. Cross members are displaceably mounted in guides. The clamping devices may brace a cross member at right angles to the displacement direction of the cross member to avoid fit clearance between guides and cross members. The clamping devices are located on the guides and have clamping jaws which contact a surface of the cross members.

The known clearance compensation devices are actuated distinctly from the actuation of the co-operating beam elements.

The present disclosure is directed, at least in part, to improving or overcoming one or more aspects of the prior art system.

### Brief Summary of the Invention

In a first aspect, the present disclosure describes a play eliminating apparatus as defined in appended claim 1. The apparatus according to the present disclosure provides for the hydraulic cylinder and the lock member to be controlled by a common control circuit. The control circuit may be arranged so that the hydraulic cylinder and the lock member are actuated in a sequential manner without further intervention from a user of a vehicle having the variable gauge undercarriage.

The control circuit may be arranged to actuate the lock member to engage the telescopic member after extension of the hydraulic cylinder.

The apparatus may further comprise a resilient element to bias the lock member from engagement to the telescopic member.

The lock member may comprise a contact portion to engage in a corresponding aperture disposed on the telescopic member.

The lock member may engage the telescopic member in a direction transverse the displacement thereof.

The lock member may be disposed on a co-operating telescopic member.

The lock member may be disposed at a region having the greatest clearance between the co-operating telescopic members.

In a second aspect, the present disclosure describes a variable gauge undercarriage comprising the apparatus for eliminating play.

In a third aspect, the present disclosure describes a method of eliminating play in a variable gauge undercarriage as defined in appended claim 9.

The method may comprise actuating the lock member to engage the telescopic member after extension of the hydraulic cylinder.

Other features and advantages of the present disclosure will be apparent from the following description of various embodiments, when read together with the accompanying drawings.

### Brief Description of the Drawings

The foregoing and other features and advantages of the present disclosure will be more fully understood from the following description of various embodiments, when read together with the accompanying drawings, in which:
Fig. 1 is a cross-sectional view of a lock member to illustrate the apparatus for eliminating play according to the present disclosure;
Fig. 2 is an isometric view of the lock member of Fig. 1 installed on a telescopic member according to the present disclosure;
Fig. 3 is an isometric view of the lock member of Fig. 1 in an advanced position according to the present disclosure;
Fig. 4 is an isometric view of the lock member of Fig. 1 installed on a telescopic member positioned alongside a co-operating telescopic member according to the present disclosure;
Fig. 5 is a cross-sectional view of a variable gauge undercarriage incorporating an embodiment of the apparatus for eliminating play according to the present disclosure.
Fig. 6 is a schematic representation of a control circuit for the control of the apparatus for eliminating play according to the present disclosure;
Fig. 7 is a schematic representation of a control circuit of Fig. 6 at activation to extend a variable gauge undercarriage and indicating flow of hydraulic fluid to a hydraulic cylinder;
Fig. 8 is a schematic representation of a control circuit of Fig. 6 at activation to extend the variable gauge undercarriage and indicating flow of hydraulic fluid to the hydraulic cylinder and a lock member;
Fig. 9 is a schematic representation of a control circuit of Fig. 6 at activation to retract the variable gauge undercarriage and indicating flow of hydraulic fluid to the hydraulic cylinder and the lock member;
Fig. 10 is a schematic representation of a control circuit of Fig. 6 at activation to retract the variable gauge undercarriage and indicating further flow of hydraulic fluid to the lock member for extension thereof;
Fig. 11 is a cross-sectional view of an embodiment of a lock member according to the present disclosure.

### Detailed Description

This disclosure generally relates to an apparatus for eliminating play between co-operating telescopic members of a variable gauge undercarriage. The apparatus according to the present disclosure may comprise a lock member **10** (which is not an embodiment of the present invention), a hydraulic cylinder **60** and a control circuit **64.**

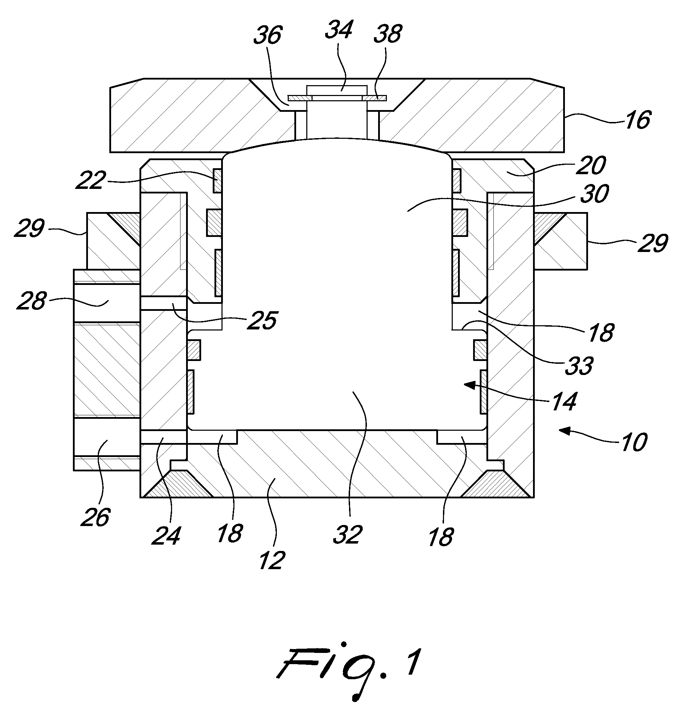

Fig. 1 illustrates the lock member **10** for an exemplary purpose. The lock member **10** may be hydraulically operable and may comprise a casing **12,** a piston **14,** and a contact element **16.**

The casing **12** may comprise walls which define a space **18** and therein the piston **14** may move in a linear direction. A wall **20** of the casing may comprise an opening through which piston **14** may protrude out of casing **12.** With the piston **14** in position through the wall **20,** space **18** may be sealed from the opening in the **wall 20.** Gaskets **22** may be provided on the walls of casing **12** and the piston **14.** Casing **12** may comprise channels **24** and **25** which may be contiguous with space **18.** Channels **24** and **25** lead to ports **26** and **28** respectively. Casing **12** may be provided with collar **29** through which the casing **12** may be supported in the variable gauge undercarriage.

Piston **14** may comprise rod portion **30** and a base portion **32.** Rod portion **30** may have a smaller width relative to base portion **32** and may be centrally positioned on base portion **32** such that the longitudinal sides of the rod portion **30** are located within the periphery of the base portion **32** to form a shoulder **33.** Rod portion **30** may move through wall **20** while base portion **32** may move within the space **18.** The movement of piston **14** may be restricted by the walls of the casing **12.** Shoulder **33** may abut wall **20** at the end of a stroke and base portion **32** may abut the opposite wall at the end of a subsequent stroke. Base chamber through respective channels **24** and **25.** Hydraulic fluid may flow into or out from the chambers through the respective ports **26, 28** and may thereby effect a movement of the piston **14** within space and through the opening in wall **20.**

A flow of pressurised hydraulic fluid through port **26** into base-side chamber may move the piston **14** out from space **18** though the opening in wall **20** until shoulder **33** abuts wall **20** at the advanced position of the piston **14.** A flow of pressurised hydraulic fluid through port **28** into rod-side chamber may move the piston **14** into space **18** though the opening in wall **20** until base portion **32** abuts casing **12** in the initial position of the piston **14**.

Extending from an end of the rod portion **30,** opposite the end the base portion **32,** may be a flange **34.** Flange **34** may be formed unitarily with piston **14.** In an embodiment flange **34** may be initially formed separately from the piston **14** and both components may be subsequently united by mechanical or chemical attachment. In an embodiment, flange **34** may be centrally positioned on the rod portion **30** wherein flange **34** extends axially along the central axis of the piston **14.**

Contact element **16** may be provided on the rod portion **30** of the piston **14.** Contact element **16** may be formed unitarily with piston **14.** In an embodiment Contact element **16** may be initially formed separately from the piston **14** and both components may be subsequently united by mechanical or chemical attachment. Contact element **16** may comprise an aperture **36** through which the flange **34** protrudes.

The contact element **16** may be suitably formed to couple to a telescopic member. In another embodiment the contact element **16** may abut and brace the telescopic member. In another embodiment, the contact element **16** may be in a form of a male member or a female member to contact and couple to a reciprocal portion on the telescopic member. In an embodiment the contact element **16** may be a disc to couple to a correspondingly shaped window located in the telescopic member.

A retaining element **38** may engage to flange **34** to prevent an unexpected detachment of the contact element **16** from the piston **14.** The retaining element **38** and the flange **34** may be reversibly connected. The retaining element **38** may be disconnected from the flange **34** to enable dismantling of the contact element **16,** formed as a separate unit from the piston **14.** Aperture **36** of the contact element **16** may be shaped and dimensioned to accommodate the retaining element **38.**

The lock member **10** may be moveable between an engaged position and a disengaged position. In the engaged position, the piston **14** may be in an advanced position and the contact element **16** may engage the telescopic member to reduce play between the co-operating telescopic members. In the disengaged position, both the piston **14** and the contact element **16** may be at the initial position allowing for play between the co-operating telescopic members.

The lock member **10** may be suitably positioned within the variable gauge undercarriage to reduce play between the co-operating telescopic members. In a variable gauge undercarriage clearance between a pair of co-operating telescopic members may vary at different regions depending on the type of undercarriage. In an undercarriage, the clearance between a pair of telescopic members may be greater at the sides thereof closer to the ground while the sides further from the ground may have lesser clearance. The lock member **10** may be disposed in a region of the variable gauge undercarriage having the greatest clearance between the co-operating telescopic members.

The lock member **10** may be suitably installed in the variable gauge undercarriage depending on the type of the undercarriage. In an embodiment, lock member **10** may be disposed on a telescopic member.

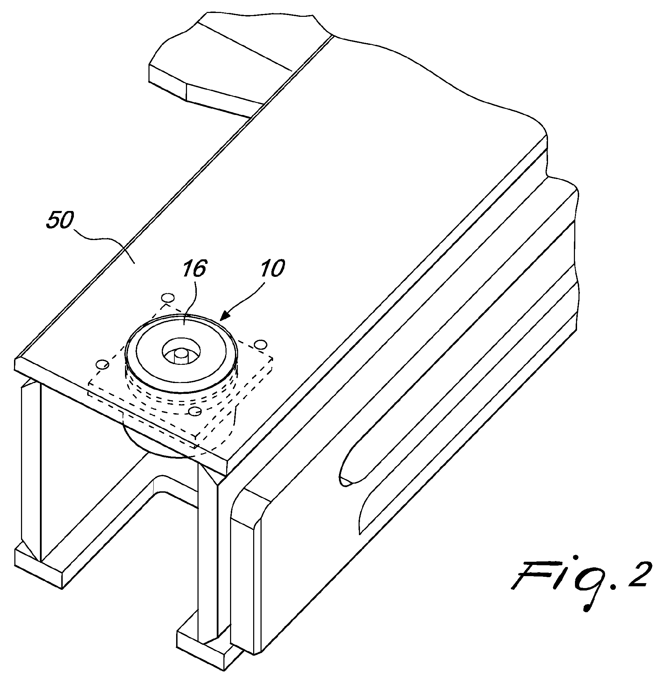

Fig. 2 illustrates the lock member **10** installed on a telescopic member **50** of a chassis of the variable gauge undercarriage. The lock member **10** may be disposed on telescopic member **50** at a region of overlap between the co-operating telescopic members and the contact element **16** in the initial position may be flush with surface of the telescopic member **50.**

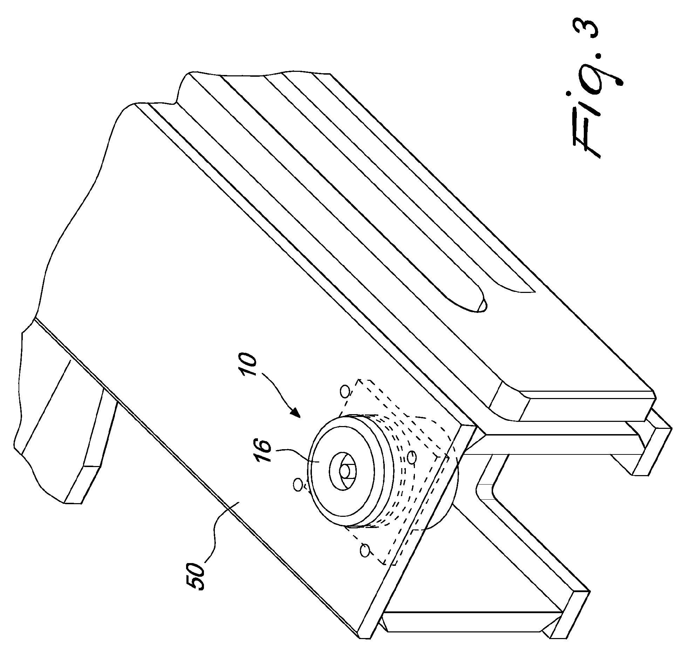

Fig. 3 illustrates the lock member **10** installed on a telescopic member **50** of a chassis of the variable gauge undercarriage with contact element **16** in an advanced position and positioned beyond the surface of the telescopic member **50.**

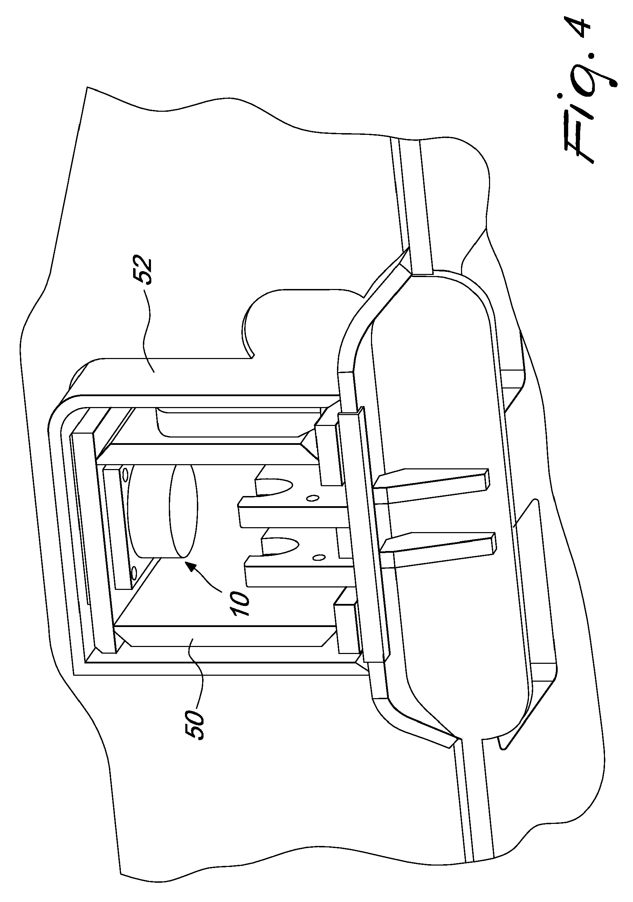

Fig. 4 illustrates the lock member **10** installed on a telescopic member **50.** The telescopic member **50** may be positioned alongside the co-operating telescopic member **52.**

In a further embodiment, the variable gauge undercarriage may comprise a guide and a plurality of telescopic members. The lock member **10** may be disposed on the guide to brace the telescopic members against each other.

The lock member **10** engages a telescopic member substantially transverse the direction of telescopic displacement of the telescopic members. Engagement of lock member **10** with a telescopic member eliminates play between co-operating telescopic members. In another embodiment, each group of co-operating telescopic members may be associated with a plurality of lock members **10.**

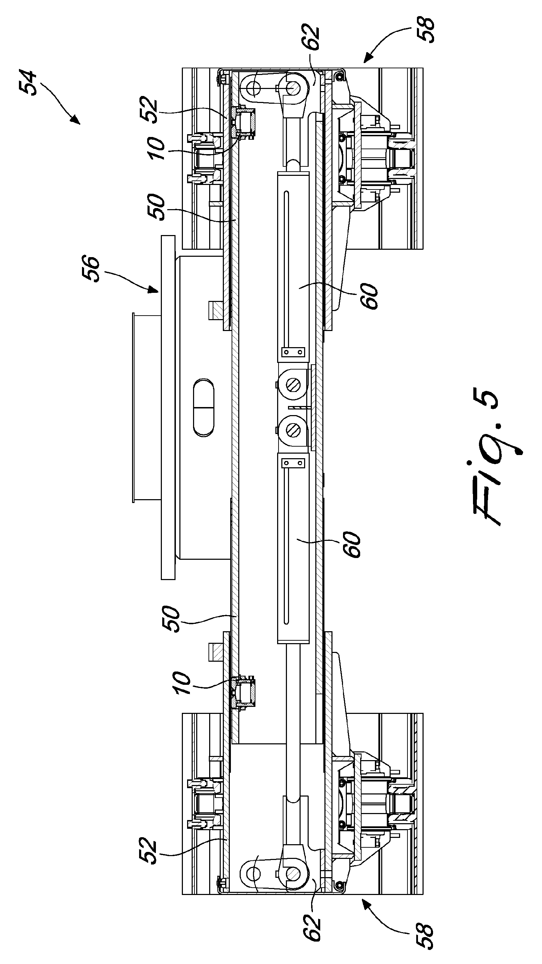

Fig. 5 illustrates a variable gauge undercarriage **54** for a vehicle comprising the apparatus of the present disclosure. Variable gauge undercarriage **54** comprises a central chassis **56** and two lateral carriages **58.** Central chassis **56** may include plurality of telescopic members **50** and carriage **58** may include plurality of co-operating telescopic members **52.** A group of co-operating telescopic members may be associated with a hydraulic cylinder **60.** Each carriage **58** may move relative the chassis **56** by actuation of hydraulic cylinders **60.** Hydraulic cylinders **60** may provide the actuation to extend or retract the variable gauge undercarriage by moving respective carriage **58.**

By supplying hydraulic cylinders **60** with the appropriate hydraulic pressure, cylinders **60** may move the carriages **58.** Extension of the hydraulic cylinders **60** may cause an extension of co-operating telescopic members and a corresponding movement of the carriages **58** from the chassis **56.** Conversely, a retraction of the hydraulic cylinders **60** may cause a retraction of co-operating telescopic members and a corresponding movement of the carriages **58** towards the chassis **56.**

Support **62** may be provided in each of the carriages **58.** Each support **62** may couple to and retain each hydraulic cylinder **14.** Guides, that may be provided on the ends of a central chassis **56** and two lateral carriages **58,** may be of the prism-shaped type and may ensure the required alignment among the telescopic components.

In an embodiment, each lock member **10** may be associated with a group of telescopic members and a hydraulic cylinder **60.** Depending on the type of variable gauge undercarriage, there may be two or four hydraulic cylinders **60** and at least a corresponding number of lock members **10.** The lock member **10** may be associated with telescopic members **50** and **52** and may be positioned on telescopic member **50,** at the upper side thereof which is the side further from the ground in a variable gauge undercarriage.

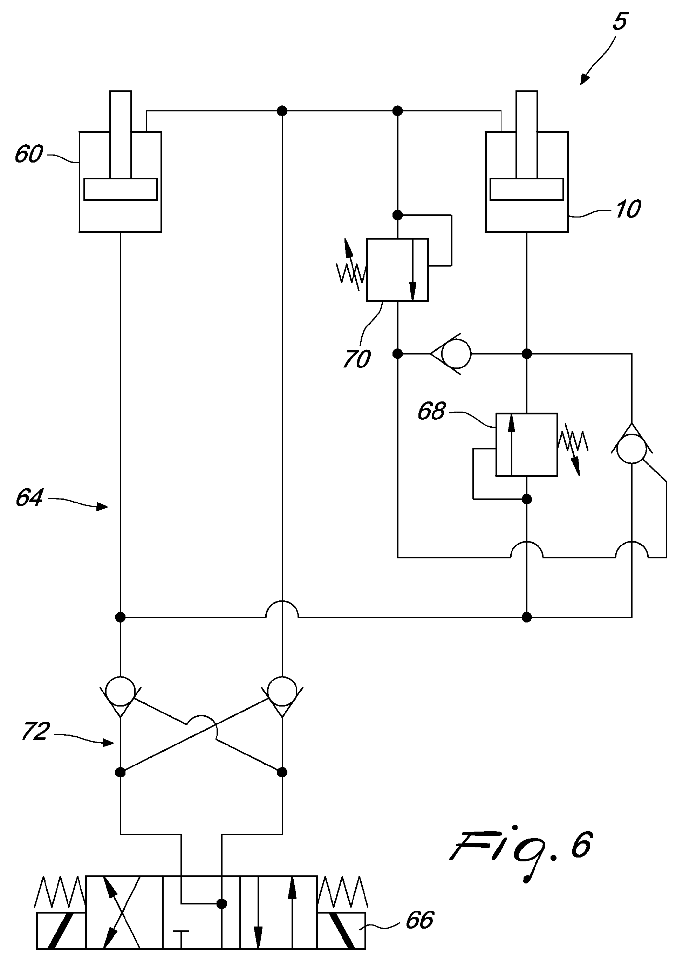

Fig. 6 illustrates a hydraulic scheme of apparatus **5** for control of lock member **10** and hydraulic cylinder **60** of a carriage **58.** The control circuit **64** may be suitably connected to the hydraulic cylinder **60** and the lock member **10** for operation and control of the said components. The control circuit **64** may be suitably arranged to be activated from a cab of the vehicle so that the control circuit **64** may be operated by an operator positioned in the cab.

The control circuit **64** may comprise a distributor **66** for pumping a hydraulic fluid and lines for flow of the hydraulic fluid to and from hydraulic cylinder **60** and lock member **10.** Activating the control circuit **64** may increase the pressure in the hydraulic lines, which may act on the hydraulic cylinder **60** and on the lock member **10.** Operation of the hydraulic cylinder **60** and lock member **10** may be effected through pressurisation of the hydraulic fluid in the lines connecting said components to the control circuit **64.** The hydraulic pressure provides the force for hydraulic cylinder **60** to extend or retract and thereby correspondingly effect a movement in the variable gauge undercarriage **54** and for lock member **10** to move to the advanced position to engage the telescopic member or to move to the initial position.

The control circuit **64** may be arranged to actuate sequentially lock member **10** and hydraulic cylinder **60.** The control circuit **64** may be configured such that the hydraulic cylinder **60** may be actuated prior to actuation of the lock member **10** for extension of co-operating telescopic members **50** and **52** and lock member **10** may be actuated prior to hydraulic cylinder **60** for retraction of co-operating telescopic members **50** and **52.**

The control circuit **64** may be arranged to provide hydraulic pressure sequentially to lock member **10** and hydraulic cylinder **60.** The control circuit **64** may be arranged to provide a hydraulic actuation pressure to hydraulic cylinder **60** prior to lock member **10** for extension of co-operating telescopic members **50** and **52** and to provide a hydraulic actuation pressure to lock member **10** prior to hydraulic cylinder **60** for retraction of co-operating telescopic members **50** and **52.**

In an embodiment, the control circuit **64** may be arranged to provide an initial hydraulic pressure simultaneously through the hydraulic lines of the control circuit **64** by distributor **66.** Sequential actuation of hydraulic cylinder **60** and lock member **10** may then be effected through the sequence valve **68** and the physical difference of the hydraulic cylinder **60** and lock member **10 in** the control circuit **64** as illustrated in hydraulic scheme of Fig. 6.

In an embodiment, the control circuit **64** may further comprise a block valve **72** to control and select the flow paths of the hydraulic fluid.

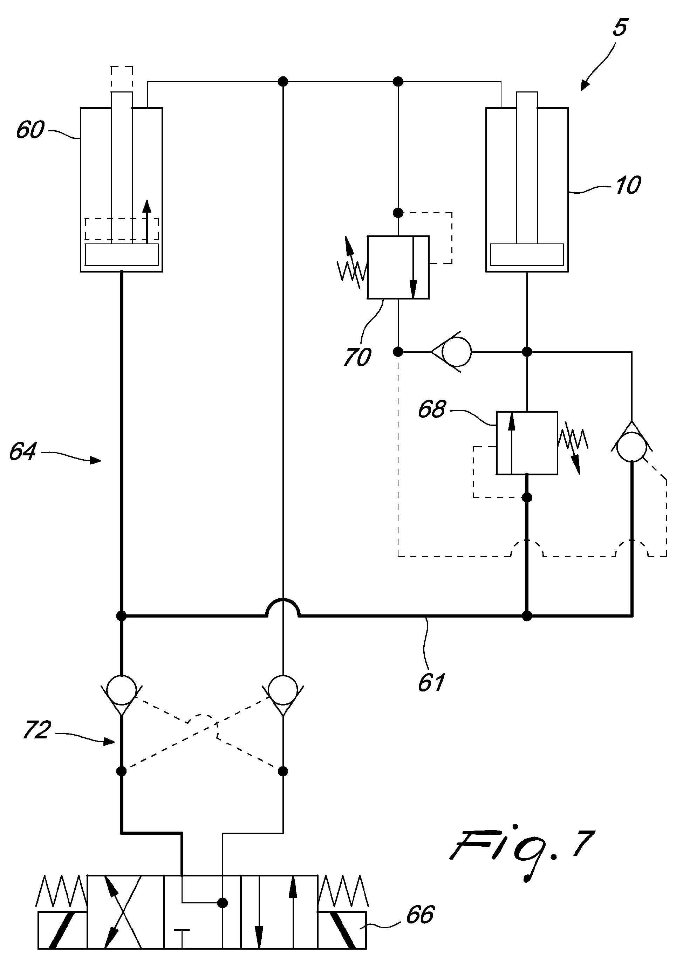

The skilled person would appreciate the specific operation of the control circuit **64** from Figs. 7-10.

Fig. 7 shows the control circuit **64** at activation to extend the variable gauge undercarriage **54** and indicating flow of hydraulic fluid to the hydraulic cylinder **60** and the sequence valve **68.** At activation of the control circuit **64,** to extend co-operating telescopic members **50** and **52** and respective carriage **58,** hydraulic fluid may flow to the hydraulic cylinder **60** and sequence valve **68,** through the hydraulic lines defining an extension flow path **61** (denoted by thickened lines in Fig. 7.). Sequence valve **68** may control flow of hydraulic fluid to lock member **10.**

Hydraulic pressure may increase in the hydraulic lines in the extension flow path **61** as more hydraulic fluid flows into the hydraulic lines. Hydraulic pressure may act on the hydraulic cylinder **60** to cause an extension of the piston rod. The piston rod of hydraulic cylinder **60** may extend to the maximum extension of telescopic members **50** and **52.** At the maximum extended position of the carriage **58** the piston rod of the hydraulic cylinder **60** may not extend further, preventing further flow of hydraulic fluid into the hydraulic cylinder **60,** which increases pressure of the hydraulic fluid therein and the hydraulic lines.

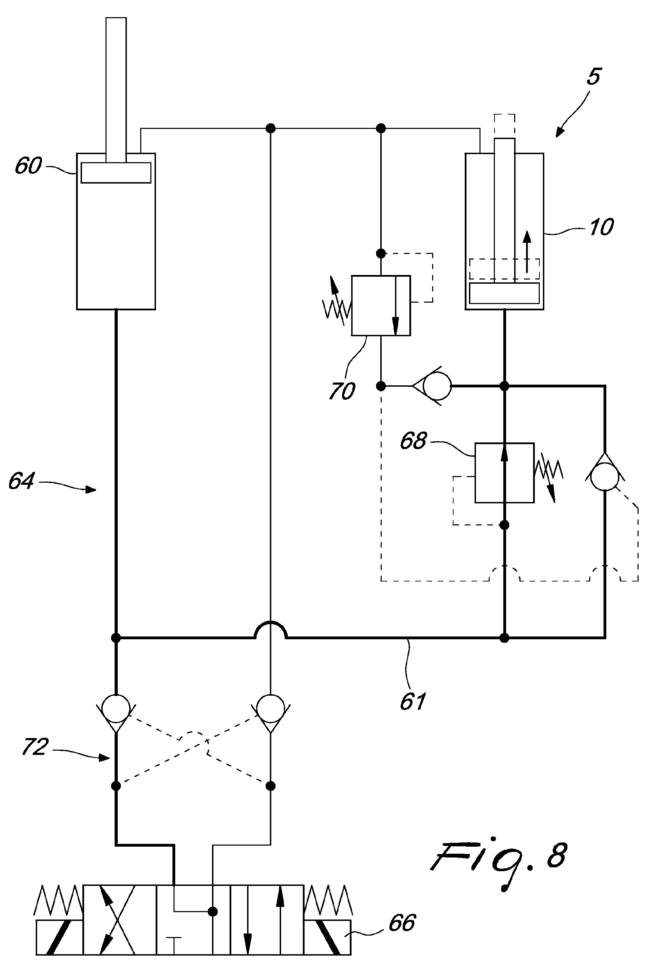

Fig. 8 shows the control circuit **64** at activation to extend the variable gauge undercarriage **54** and indicating flow of hydraulic fluid in the extension flow path **61** through the sequence valve **68** to the lock member **10.** As pressure increases in the hydraulic lines of the extension flow path **61** to the point of exceeding the threshold pressure of the sequence valve **68** hydraulic fluid may be permitted to flow to the lock member **10** for actuation thereof. Hydraulic fluid may flow into the lock member **10** through port **26** into the base-side chamber to advance the piston **14** out from casing **12** to engage contact element **16** with a telescopic member. Hydraulic pressure may be maintained in the control circuit **64** by block valve **72** to retain the lock member **10** in the engaged position.

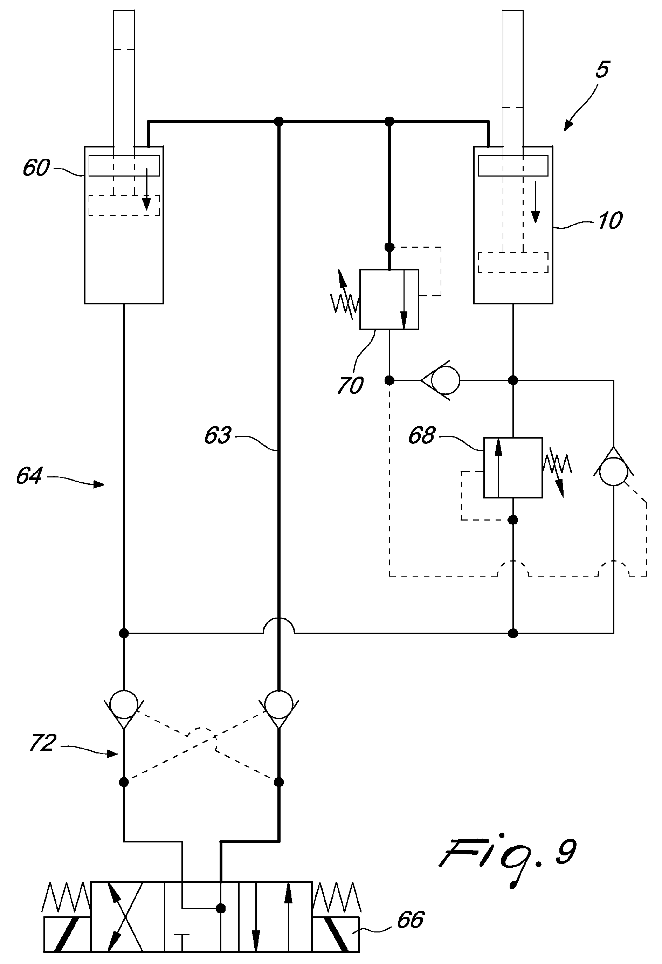

Fig. 9 shows a control circuit at activation to retract the variable gauge undercarriage **54** and indicating flow of hydraulic fluid to the hydraulic cylinder **60,** the lock member **10** and sequence valve 70. At activation of the control circuit **64,** to retract co-operating telescopic members **50** and **52** and respective carriage **58,** hydraulic fluid may flow to the hydraulic cylinder **60** and sequence valve **70,** through the hydraulic lines defining a retraction flow path **63** (denoted by thickened lines in Fig. 9.). As more hydraulic fluid flows into the retraction flow path **63,** hydraulic pressure may increase in the hydraulic lines. At the same time hydraulic fluid may be permitted to flow out of the hydraulic lines of the extension flow path **61** thereby decreasing the hydraulic pressure in these lines.

Hydraulic fluid may flow into the lock member **10** through port **28** into the rod-side chamber to return the piston **14** to the initial position and to disengage contact element **16** from the telescopic member. Upon return of piston **14** to the initial position base portion **32** abuts casing **12,** preventing further flow of hydraulic fluid into the rod-side chamber, which increases the pressure of the hydraulic fluid therein and the hydraulic lines. In an embodiment, the increase in hydraulic pressure may then act on the hydraulic cylinder **60** to cause a retraction of the piston rod.

Piston **14** may weigh less than the piston rod of hydraulic cylinder **60** and accordingly an equivalent hydraulic pressure may differentially effect movement of piston **14** and the piston rod of hydraulic cylinder **60.**

In an embodiment, disengagement of contact element **16** of lock member **10** may occur before the retraction of the piston rod of the hydraulic cylinder **60.** In another embodiment, return of piston **14** to the initial position may be completed before the piston rod of the hydraulic cylinder **60** initiates movement. Hydraulic cylinder **60** may retract telescopic members **50** and **52** and bring carriage **58** to a retracted position relative to chassis **56.**

In an embodiment, hydraulic pressure may be maintained in the control circuit **64** by block valve **72** to retain the lock member **10** in the disengaged position.

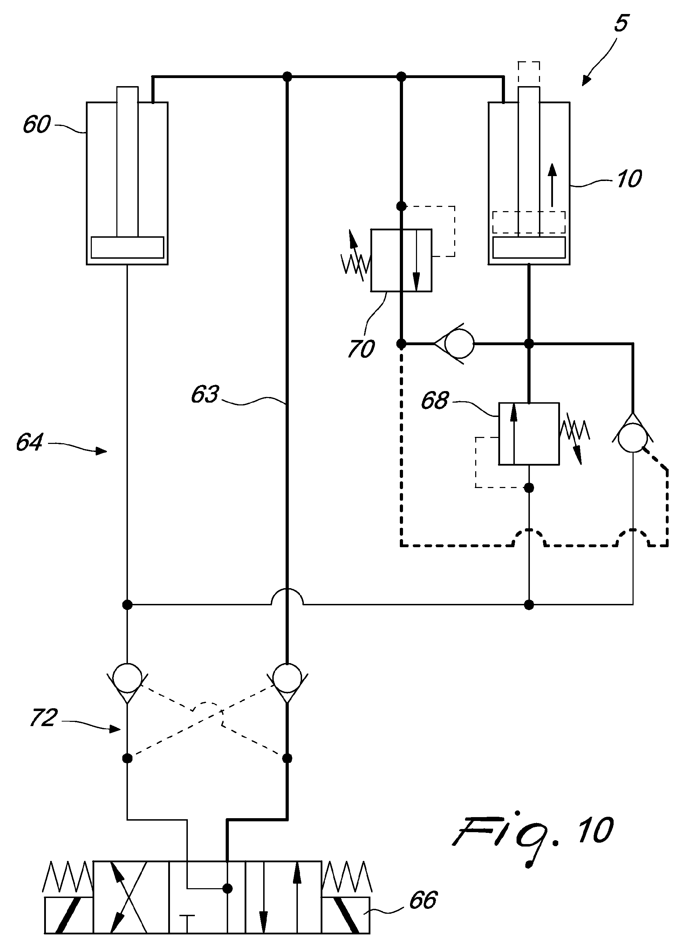

Fig. 10 shows an embodiment of a control circuit **16** at activation to retract the variable gauge undercarriage **54** and indicating further flow of hydraulic fluid to the lock member **10.** Hydraulic pressure in the retraction flow path **63** may increase further with the piston **14** and piston rod of the hydraulic cylinder **60** at their respective fully retracted positions. As pressure increases in the hydraulic lines of the retraction flow path **63** to the point of exceeding the threshold pressure of the sequence valve **70** hydraulic fluid may be permitted to flow to the lock member **10** for actuation thereof.

Hydraulic fluid may flow into the lock member **10** through port **26** into the base-side chamber in counter to the hydraulic fluid already in the rod-side chamber. A larger surface of piston **14** may be available for action of the hydraulic fluid in the base-side chamber than the surface of piston **14** available for action of the hydraulic fluid in the base-side chamber. The hydraulic pressure acting on the piston **14** may be greater in the base-side chamber than in the rod-side chamber causing the piston **14** to advance out from casing **12** to engage contact element **16** with a telescopic member with the telescopic members **50** and **52** in the fully retracted position.

Hydraulic pressure may be maintained in the control circuit **64** by block valve **72** to retain the lock member **10** in the engaged position. Release of hydraulic fluid from the retraction flow path **63** may disengage contact element **16** from the telescopic member.

In another embodiment, valves may be provided to effect sequential actuation of hydraulic cylinder **60** and lock member **10.** A cylinder valve may control flow of hydraulic fluid into the hydraulic cylinder **60** and a sequence valve may control flow of hydraulic fluid to lock member **10.** The sequence valve may have a lower pressure threshold than the cylinder valve. Due to its lower pressure threshold, sequence valve may permit flow of the hydraulic fluid to the lock member **10** before the cylinder valve permits entry of the hydraulic fluid into the hydraulic cylinder **60.**

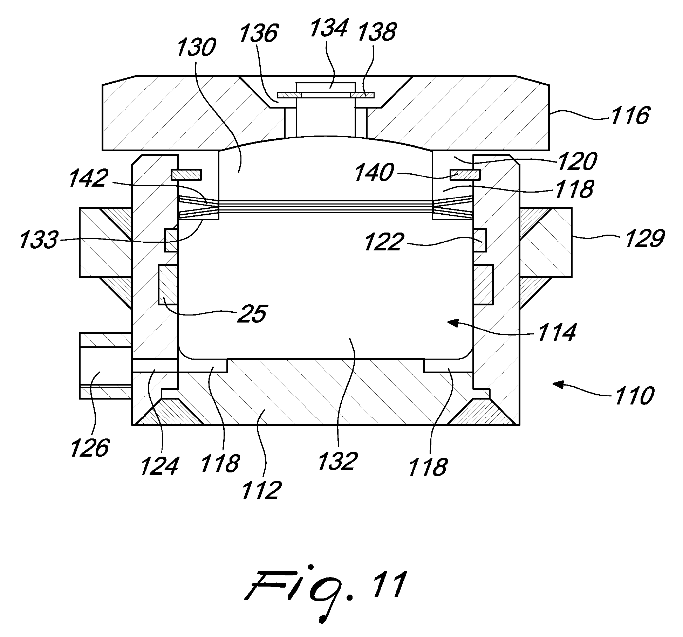

Fig. 11 illustrates an embodiment of the lock member **110** according to the present disclosure. The lock member **110** may comprise a casing **112,** a piston **114,** and a contact element **116** and may have active and passive actuation mechanisms.

The casing **112** may comprise walls which define a space **118** and therein the piston **114** may move in a linear direction. At a side, the casing **112** may not have a wall to present an opening **120.** The piston **114** may protrude out of casing **112** through the opening **120**. Gaskets **122** may be provided on the walls of casing **112** and the piston **114.** Casing **112** may comprise a channel **124** which may be contiguous with space **118.** Channel **124** may lead to port **126.** Casing **112** may be provided with collar **129** through which the casing **112** may be supported in the variable gauge undercarriage.

Piston **114** may comprise rod portion **130** and a base portion **132.** Rod portion **130** may have a smaller width relative to base portion **132** and may be centrally positioned on base portion **132** such that the longitudinal sides of the rod portion **130** are located within the periphery of the base portion **132** to form a shoulder **133.** Rod portion **130** and base portion **132** move within the space **118.** The movement of piston **114** may be restricted by the walls of the casing **112** and a limiting ring **140** disposed adjacent opening **120.** Base portion **132** may abut a wall of casing **112** at the end of a stroke and shoulder **133** may abut the limiting ring **140** at the end of a subsequent stroke. Base portion **132** may divide space **118** in two chambers, a base-side chamber and a rod-side chamber. The base-side chamber may be sealed by the based portion **132** and the walls of casing **112** while the rod-side chamber is open to the exterior of the casing **112** through opening **120.**

A hydraulic fluid acts on the piston **114** at the base-side chamber. Port **126** communicates with the base-side chamber through channel **124.** Hydraulic fluid may flow into the lower chamber through respective port **126** and may thereby effect an extension of the piston **114** within space **118** and through the opening **120.**

A resilient element **142** may be provided in the casing **112** and coupled to the piston **114.** The resilient element **142** may extend through the rod portion **130,** and opposite ends of the resilient element **142** may be attached to opposite walls of the casing **112,** within space **118.** In another embodiment, an end of the resilient element **142** may be connected to a wall of the casing **112,** within space **118,** and the other end may be connected to the piston **114.** A plurality of resilient elements **142** may be provided for both embodiments.

In an embodiment the resilient element may be a spring.

Resilient element **142** may be connected between the walls of the casing **112** and the piston **114** so as to bias the piston **114** within space **118** such that base portion **132** abuts the wall of the casing **112.**

Piston **114** may be moved from an initial position, by flow of hydraulic fluid into base-side chamber through port **126** and channel **124,** such that rod portion **130** may be moved out of space **118** through the opening **120** until shoulder **133** abuts the limiting ring **140.** Pressure exerted by the hydraulic fluid within the base-side chamber may counter and exceed the force exerted by the resilient element **142.** With the piston **114** in the advanced position, the resilient element **142** may act to return the piston **114** through the opening **120** to the initial position.

Extending from an end of the rod portion **130,** opposite the end of the base portion **132,** may be a flange **134.** Flange **134** may be formed unitarily with piston **114.** In an alternative embodiment flange **134** may be initially formed separately from the piston **114** and both components may be subsequently united by mechanical or chemical attachment. In an embodiment, flange **134** may be centrally positioned on the rod portion **130** wherein flange **134** extends axially along the central axis of the piston **114.**

Contact element **116** may be provided on the rod portion **130** of the piston **114.** Contact element **116** may be formed unitarily with piston **114.** In an alternative embodiment contact element **116** may be initially formed separately from the piston **114** and both components may be subsequently united by mechanical or chemical attachment. Contact element **116** may comprise an aperture **136** through which the flange **134** protrudes.

The contact element **116** may be suitably formed to couple to a telescopic member. In an embodiment the contact element **116** may abut and brace against the telescopic member. In another embodiment the contact element **116** may be in a form of a male member or a female member to contact and couple to a reciprocal portion on the telescopic member. In an embodiment the contact element **116** may be a disc to couple to a correspondingly shaped window located in the telescopic member.

A retaining element **138** may engage to flange **134** to prevent an unexpected detachment of the contact element **116** from the piston **114.** The retaining element **138** and the flange **134** may be reversibly connected. The retaining element **138** may be disconnected from the flange **134** to enable dismantling of the contact element **116,** formed as a separate unit from the piston **114.** Aperture **136** of the contact element **116** may be shaped and dimensioned to accommodate the retaining element **138.**

In an embodiment, the hydraulic control circuit **64** may be adapted when connected with lock member **110.** Hydraulic lines in the retraction flow path 63 may not be connected to the lock member **110.**

At activation of the control circuit **64** connected to the lock member **110,** to extend co-operating telescopic members **50** and **52** and respective carriage **58,** hydraulic fluid may flow to the hydraulic cylinder **60** and sequence valve **68,** through the hydraulic lines defining the extension flow path 61.

Hydraulic pressure may increase in the hydraulic lines in the extension flow path 61 as more hydraulic fluid flows into the hydraulic lines. Hydraulic pressure may act on the hydraulic cylinder **60** to cause an extension of the piston rod. The piston rod of hydraulic cylinder **60** may extend to the maximum extension of telescopic members **50** and **52.** At the maximum extended position of the carriage **58** the piston rod of the hydraulic cylinder **60** may not extend further, preventing further flow of hydraulic fluid into the hydraulic cylinder **60,** which increases pressure of the hydraulic fluid therein and the hydraulic lines.

As pressure increases in the hydraulic lines in the extension flow path **61** to the point of exceeding the threshold pressure of the sequence valve **68** hydraulic fluid may be permitted to flow to the lock member **110** for actuation thereof. Hydraulic fluid may flow into the lock member **110** through port **126** into the base-side chamber. Hydraulic pressure within the base-side portion may exceed the force of the resilient element **142,** which tends to retain the piston **114** in the initial position, to advance the piston **114** out from casing **112** to engage contact element **116** with a telescopic member. Hydraulic pressure may be maintained in the control circuit **64** to retain the lock member **110** in the engaged position.

At activation of the control circuit **64** connected to the lock member **110,** to retract co-operating telescopic members **50** and **52** and respective carriage **58,** hydraulic fluid may flow to the hydraulic cylinder **60,** through the hydraulic lines defining the retraction flow path **63,** hydraulic pressure may increase in the hydraulic lines. At the same time hydraulic fluid may be permitted to flow out of the hydraulic lines of the extension flow path **61** thereby decreasing the hydraulic pressure in these lines.

As hydraulic pressure decreases in the hydraulic lines of the extension flow path **61,** pressure in the base-side chamber of lock member **110** may decrease correspondingly. The pressure may decrease below the level of force that may be applied by the resilient element **142** on the piston **114.** The resilient element **142** acts on the piston **114** to return the piston **114** to the initial position and to disengage contact element **116** from the telescopic member.

The skilled person would appreciate that foregoing embodiments may be modified to obtain the apparatus of the present disclosure

### Industrial Applicability

This disclosure describes an apparatus **5** for a variable gauge vehicle.

In the operation of variable gauge vehicle, the carriages may be extended or retracted according to work or external requirements, by hydraulic cylinders. The carriages may be retracted during transportation of the vehicle and extended at the work site. The carriages may be extended to the maximum positions as required. The apparatus **5** enables automatic actuation of the lock member **10**, **110** and an associated hydraulic cylinder **60** in sequence by way of a common control circuit. Lock member **10, 110** engages a telescopic member to eliminate play between co-operating telescopic members.

The industrial applicability of the apparatus **5** as described herein will have been readily appreciated from the foregoing discussion.

Accordingly, this disclosure includes all modifications and equivalents of the subject matter as permitted by applicable law. Moreover, any combination of the above-described elements in all possible variations thereof is encompassed by the disclosure unless otherwise indicated herein.

Where technical features mentioned in any claim are followed by references signs, the reference signs have been included for the sole purpose of increasing the intelligibility of the claims and accordingly, neither the reference signs nor their absence have any limiting effect on the technical features as described above or on the scope of any claim elements.

One skilled in the art will realise the disclosure may be embodied in other specific forms without departing from the disclosure or essential characteristics thereof. The foregoing embodiments are therefore to be considered in all respects illustrative rather than limiting of the disclosure described herein.

## Claims

1. A play eliminating apparatus (5) in a variable gauge undercarriage (54) comprising:
a hydraulic cylinder (60) to actuate relative movement between co-operating telescopic members (50, 52);
a lock member (110) for engaging a telescopic member to eliminate play between the telescopic members (50, 52), the lock member (110) comprising a contact member (116) to abut and brace the telescopic member (50, 52); **characterised in that**
a control circuit (64) is connected to the lock member (110) and the hydraulic cylinder (60) to sequentially actuate the lock member (110) and the hydraulic cylinder (60) wherein the lock member (110) is configured to be biased from engagement with the telescopic member (50, 52) and the control circuit (64) is arranged to release the lock member (110) from engagement to the telescopic member (50, 52) prior to retraction of the hydraulic cylinder (60).

2. The apparatus (5) according to claim 1 wherein the control circuit (64) is arranged to actuate the lock member (100) to engage the telescopic member (50, 52) after extension of the hydraulic cylinder (60).

3. The apparatus (5) according to claim 1 or 2 further comprising a resilient element (142) to bias the lock member (110) from engagement to the telescopic member (50, 52).

4. The apparatus (5) according to any of the preceding claims wherein the contact member (116) is configured to engage in a corresponding aperture disposed on the telescopic member (50, 52).

5. The apparatus (5) according to any of the preceding claims wherein the lock member (110) engages the telescopic member (50, 52) in a direction transverse the displacement thereof.

6. The apparatus (5) according to any of the preceding claims wherein the lock member (110) is disposed on a co-operating telescopic member (50, 52).

7. The apparatus (5) according to any of the preceding claims wherein the lock member (110) is disposed at a region having the greatest clearance between the co-operating telescopic members (50, 52).

8. A variable gauge undercarriage (54) comprising the apparatus (5) according to any one of the preceding claims.

9. A method of eliminating play in a variable gauge undercarriage (54) comprising:
arranging a hydraulic cylinder (60) to actuate relative movement between co-operating telescopic members (50, 52);
arranging a lock member (110) to engage a telescopic member for eliminating play between the telescopic members (50, 52), the lock member (110) comprising a contact member (116) to abut and brace the telescopic member (50, 52); **characterised by**
coupling a control circuit (64) to the lock member (110) and the hydraulic cylinder (60) to sequentially actuate the lock member (110) and the hydraulic cylinder (60);
biasing the lock member (110) from engagement with the telescopic member (50, 52); and
releasing the lock member (110) from engagement with the telescopic member (50, 52) prior to retraction of the hydraulic cylinder (60).

10. The method according to claim 9 comprising actuating the lock member (110) to engage the telescopic member after extension of the hydraulic cylinder (60).

## Patentansprüche

1. Spieleliminierungsvorrichtung (5) in einem spurbreitenveränderlichen Fahrwerk (54), umfassend:
- einen Hydraulikzylinder (60), um eine relative Bewegung zwischen zusammenwirkenden Teleskopgliedern (50, 52) zu betätigen;
- ein Sperrglied (110) für einen Eingriff mit einem Teleskopglied, um ein Spiel zwischen den Teleskopgliedern (50, 52) zu eliminieren, wobei das Sperrglied (110) ein Kontaktglied (116) umfasst, um an dem Teleskopglied (50, 52) anzuliegen und dieses zu befestigen;
**dadurch gekennzeichnet, dass** eine Steuerschaltung (64) mit dem Sperrglied (110) und dem Hydraulikzylinder (60) verbunden ist, um sequentiell das Sperrglied (110) und den Hydraulikzylinder (60) zu betätigen, wobei das Sperrglied (110) ausgelegt ist, aus einem Eingriff mit dem Teleskopglied (50, 52) vorgespannt zu werden, und wobei die Steuerschaltung (64) eingerichtet ist, das Sperrglied (110) aus einem Eingriff mit dem Teleskopglied (50, 52) vor dem Zurückziehen des Hydraulikzylinders (60) freizugeben.

2. Vorrichtung (5) nach Anspruch 1, wobei die Steuerschaltung (64) eingerichtet ist, das Sperrglied (100) zu betätigen, um mit dem Teleskopglied (50, 52) nach dem Ausfahren des Hydraulikzylinders (60) in Eingriff zu gelangen.

3. Vorrichtung (5) nach Anspruch 1 oder 2, ferner umfassend ein nachgiebiges Element (142), um das Sperrglied (110) aus einem Eingriff mit dem Teleskopglied (50, 52) vorzuspannen.

4. Vorrichtung (5) nach einem der vorhergehenden Ansprüche, wobei das Kontaktglied (116) ausgelegt ist, mit einer entsprechenden Öffnung, die an dem Teleskopglied (50, 52) angeordnet ist, in Eingriff zu gelangen.

5. Vorrichtung (5) nach einem der vorhergehenden Ansprüche, wobei das Sperrglied (110) mit dem Teleskopglied (50, 52) in einer Richtung quer zur Verschiebung davon in Eingriff gelangt.

6. Vorrichtung (5) nach einem der vorhergehenden Ansprüche, wobei das Sperrglied (110) an einem zusammenwirkenden Teleskopglied (50, 52) angeordnet ist.

7. Vorrichtung (5) nach einem der vorhergehenden Ansprüche, wobei das Sperrglied (110) in einer Zone angeordnet ist, die den größten Spielraum zwischen den zusammenwirkenden Teleskopgliedern (50, 52) aufweist.

8. Spurbreitenveränderliches Fahrwerk (54), umfassend die Vorrichtung (5) nach einem der vorhergehenden Ansprüche.

9. Verfahren zum Eliminieren eines Spiels in einem spurbreitenveränderlichen Fahrwerk (54), umfassend:
- Einrichten eines Hydraulikzylinders (60), um eine relative Bewegung zwischen zusammenwirkenden Teleskopgliedern (50, 52) zu betätigen;
- Einrichten eines Sperrglieds (110), um mit einem Teleskopglied in Eingriff zu gelangen, um ein Spiel zwischen den Teleskopgliedern (50, 52) zu eliminieren, wobei das Sperrglied (110) ein Kontaktglied (116) umfasst, um an dem Teleskopglied (50, 52) anzuliegen und dieses zu befestigen;
**gekennzeichnet durch**:
- Koppeln einer Steuerschaltung (64) mit dem Sperrglied (110) und dem Hydraulikzylinder (60), um sequentiell das Sperrglied (110) und den Hydraulikzylinder (60) zu betätigen;
- Vorspannen des Sperrglieds (110) aus einem Eingriff mit dem Teleskopglied (50, 52); und
- Freigeben des Sperrglieds (110) aus dem Eingriff mit dem Teleskopglied (50, 52) vor dem Zurückziehen des Hydraulikzylinders (60).

10. Verfahren nach Anspruch 9, umfassend ein Betätigen des Sperrglieds (110), um mit dem Teleskopglied nach dem Ausfahren des Hydraulikzylinders (60) in Eingriff zu gelangen.

## Revendications

1. Appareil d'élimination du jeu (5) dans un train de roulement à jauge variable (54), comprenant :
un cylindre hydraulique (60) pour commander le mouvement relatif entre des éléments télescopiques coopérants (50, 52) ;
un élément de verrouillage (110) pour s'engager sur un élément télescopique afin d'éliminer le jeu entre les éléments télescopiques (50, 52), l'élément de verrouillage (110) comprenant un élément de contact (116) pour s'appuyer sur l'élément télescopique (50, 52) et l'immobiliser ; **caractérisé en ce que** :
un circuit de commande (64) est raccordé à l'élément de verrouillage (110) et au cylindre hydraulique (60) pour actionner en séquence l'élément de verrouillage (110) et le cylindre hydraulique (60), dans lequel l'élément de verrouillage (110) est configuré pour être sollicité par engagement avec l'élément télescopique (50, 52) et le circuit de commande (64) est aménagé pour libérer l'élément de verrouillage (110) de tout engagement avec l'élément télescopique (50, 52) avant la rétraction du cylindre hydraulique (60).

2. Appareil (5) selon la revendication 1, dans lequel le circuit de commande (64) est aménagé pour actionner l'élément de verrouillage (100) afin qu'il s'engage sur l'élément télescopique (50, 52) après extension du cylindre hydraulique (60).

3. Appareil (5) selon la revendication 1 ou 2, comprenant en outre un élément élastique (142) pour solliciter l'élément de verrouillage (110) par engagement avec l'élément télescopique (50, 52).

4. Appareil (5) selon l'une quelconque des revendications précédentes, dans lequel l'élément de contact (116) est configuré pour s'engager dans une ouverture correspondante ménagée sur l'élément télescopique (50, 52).

5. Appareil (5) selon l'une quelconque des revendications précédentes, dans lequel l'élément de verrouillage (110) s'engage sur l'élément télescopique (50, 52) dans une direction transversale à son déplacement.

6. Appareil (5) selon l'une quelconque des revendications précédentes, dans lequel l'élément de verrouillage (110) est disposé sur un élément télescopique coopérant (50, 52).

7. Appareil (5) selon l'une quelconque des revendications précédentes, dans lequel l'élément de verrouillage (110) est disposé dans une région ayant le jeu le plus grand entre les éléments télescopiques coopérants (50, 52).

8. Train de roulement à jauge variable (54) comprenant l'appareil (5) selon l'une quelconque des revendications précédentes.

9. Procédé d'élimination du jeu dans un train de roulement à jauge variable (54) comprenant :
l'aménagement d'un cylindre hydraulique (60) pour commander un mouvement relatif entre des éléments télescopiques coopérants (50, 52) ;
l'aménagement d'un élément de verrouillage (110) pour s'engager sur un élément télescopique afin d'éliminer le jeu entre les éléments télescopiques (50, 52), l'élément de verrouillage (110) comprenant un élément de contact (116) pour s'appuyer sur l'élément télescopique (50, 52) et l'immobiliser ; **caractérisé par** :
le couplage d'un circuit de commande (64) à l'élément de verrouillage (110) et
au cylindre hydraulique (60) pour actionner en séquence l'élément de verrouillage (110) et le cylindre hydraulique (60) ;
la sollicitation de l'élément de verrouillage (110) par engagement avec l'élément télescopique (50, 52) ; et
la libération de l'élément de verrouillage (110) de tout engagement avec l'élément télescopique (50, 52) avant la rétraction du cylindre hydraulique (60).

10. Procédé selon la revendication 9, comprenant l'actionnement de l'élément de verrouillage (110) pour s'engager sur l'élément télescopique après extension du cylindre hydraulique (60).
